# EUROPÄISCHE PATENTANMELDUNG

(11) **EP 3 736 942 A1**
(43) Veröffentlichungstag der Anmeldung: **11.11.2020**
(21) Anmeldenummer: 19172809.6
(22) Anmeldetag: 06.05.2019
(51) Int. Cl.: H02K 1/04, H02K 15/02

(54) **MAGNETBLECHSTAPEL, VERFAHREN ZUR FERTIGUNG EINES MAGNETBLECHSTAPELS UND ELEKTRISCHE MASCHINE**

(71) Anmelder: Siemens Aktiengesellschaft, 80333 München (DE)
(72) Erfinder: Buschbeck, Jörg, 90482 Nürnberg (DE); Rieger, Gotthard, 80636 München (DE); Schuh, Carsten, 85598 Baldham (DE); Soller, Thomas, 94469 Deggendorf (DE); Vollmer, Rolf, 36129 Gersfeld (DE)

(57) **Zusammenfassung**

Der Magnetblechstapel weist eine Mehrzahl von Magnetblechen (20) auf, welche voneinander elektrisch isoliert sind, indem sie voneinander überwiegend mit nichtverschwindender lichter Weite beabstandet sind.

## Beschreibung

Die Erfindung betrifft einen Magnetblechstapel, ein Verfahren zur Fertigung eines Magnetblechstapels und eine elektrische Maschine.

Es ist bekannt, elektrischen Maschinen mit Rotoren und Statoren auszubilden, welche Magnetblechstapel umfassen.

Regelmäßig werden solche Magnetblechstapel hergestellt, indem dünne, elektrisch isolierende (Polymer-)Lagen zwischen den einzelnen Magnetblechen des Magnetblechstapels eingebracht werden. Mit solchen isolierenden Lagen soll die Entstehung von Wirbelströmen unterdrückt werden und ein ausreichend mechanisch stabiler Aufbau gewährleistet werden.

Jedoch begrenzt bei solchen Magnetblechstapeln eine thermische Belastung der Magnetbleche des Magnetblechstapels deren praktischen Einsatz.

Es ist daher Aufgabe der Erfindung, einen gegenüber dem Stand der Technik verbesserten Magnetblechstapel anzugeben, welcher insbesondere eine höhere Temperaturbelastbarkeit aufweist. Ferner ist es Aufgabe der Erfindung, ein verbessertes Verfahren zur Fertigung eines Magnetblechstapels sowie eine verbesserte elektrische Maschine anzugeben.

Diese Aufgabe der Erfindung wird mit einem Magnetblechstapel mit den in Anspruch 1 angegebenen Merkmalen sowie mit einem Verfahren mit den in Anspruch 8 angegebenen Merkmalen sowie mit einer elektrischen Maschine mit den in Anspruch 11 angegebenen Merkmalen gelöst.

Bevorzugte Weiterbildungen der Erfindung sind in den zugehörigen Unteransprüchen, der nachfolgenden Beschreibung und der Zeichnung angegeben.

Der erfindungsgemäße Magnetblechstapel ist mit einer Mehrzahl von Magnetblechen gebildet, welche voneinander elektrisch isoliert sind, indem sie voneinander überwiegend mit nichtverschwindendem lichten Maß beabstandet sind.

Unter einer überwiegend mit nichtverschwindendem lichten Maß bestehenden Beabstandung der Magnetbleche ist zu verstehen, dass die Magnetbleche des Magnetblechstapels mit ihren, benachbarten Magnetblechen zugewandten, Flachseiten mit einem überwiegenden Flächenanteil nicht an zwischen den Magnetblechen befindlichen Bauteilen anliegen, sondern der überwiegende Flächenanteil der Flachseiten mit benachbarten Magnetblechen ein lichtes Maß größer als Null einschließt. Zweckmäßig ist der überwiegende Flächenanteil ein den halben Flächenanteil übersteigender Flächenanteil, vorzugsweise ein zumindest 90-prozentiger Flächenanteil, besonders bevorzugt ein mindestens 98-prozentiger Flächenanteil.

Vorteilhaft sind bei dem erfindungsgemäßen Magnetblechstapel die Magnetbleche infolge ihrer Beabstandung mit überwiegend lichtem Maß voneinander elektrisch isoliert, ohne dass eigens Isolierstoffe im festen Aggregatzustand zwischen den Magnetblechen des Magnetblechstapels vorgesehen sein müssen. Bei dem erfindungsgemäßen Magnetblechstapel ist folglich aufgrund des möglichen Verzichts von Isolationsmaterialien eine besonders hohe Temperaturstabilität ermöglicht. Zweckmäßig befindet sich über den überwiegenden Teil der flächigen Erstreckung der Magnetbleche zwischen diesen lediglich eine Gasschicht, insbesondere eine Luftschicht. Vorteilhaft sind bei dem erfindungsgemäßen Magnetblechstapel die Magnetbleche infolge ihrer Beabstandung über den überwiegenden Teil ihrer flächigen Erstreckungen lediglich durch je eine zwischenliegende Luftschicht insbesondere homogener Dicke voneinander elektrisch isoliert. Daher sind bei dem Magnetblechstapel gemäß der Erfindung weitere Isolationsmaterialien, etwa organische Isolierlagen wie insbesondere Lacke, verzichtbar. Somit ist erfindungsgemäß eine besonders hohe Temperaturbelastbarkeit des Magnetblechstapels erzielbar. Durch den definiert einstellbaren Abstand der Magnetbleche des Magnetblechstapels sind zudem weitere Freiheitsgrade im Design des Magnetblechstapels eröffnet.

Vorzugsweise sind bei dem erfindungsgemäßen Magnetblechstapel die Magnetbleche mittels eines oder mehrerer zwischenliegender Abstandshalter voneinander beabstandet.

Mittels der in dieser Weiterbildung der Erfindung vorgesehenen Abstandshalter zwischen zwei Magnetblechen ist zum einen ein definierter Spalt, insbesondere Luftspalt, zwischen den Magnetblechen realisierbar. Folglich sind die Magnetbleche durch die Spalte mit einem Kühlfluid, vorzugsweise mittels Kühlluft kühlbar. Zugleich weist der erfindungsgemäße Magnetblechstapel in dieser Weiterbildung aufgrund der vorgesehenen Abstandshalter eine besonders hohe mechanische Stabilität auf.

Geeigneterweise ist/sind bei dem erfindungsgemäßen Magnetblechstapel der oder die Abstandshalter mit oder aus Keramik gebildet. Mit Keramik gebildete Abstandshalter lassen sich vorteilhaft hochgradig elektrisch isolierend und gleichzeitig mechanisch hochfest ausbilden, sodass eine besonders hohe elektrische Temperaturbelastbarkeit ermöglicht ist.

In einer bevorzugten Weiterbildung des erfindungsgemäßen Magnetblechstapels ist oder sind der oder die Abstandshalter mit Aluminiumoxid und/oder Zirkonoxid und/oder Magnesiumoxid und/oder Yttriumoxid und/oder Bornitrid und/oder Yttrium-Aluminium-Granat und/oder Siliziumnitrid und/oder Siliziumdioxid gebildet. Gerade die vorgenannten Materalien ermöglichen Abstandshalter mit besonders stark elektrisch isolierenden und gleichzeitig mechanisch hochfesten Eigenschaften, sodass ein Magnetblechstapel mit einer hohen Temperaturbelastbarkeit realisierbar ist.

In einer vorteilhaften Weiterbildung des erfindungsgemäßen Magnetblechstapels ist/sind der oder die Abstandshalter mit Partikeln elektrisch isolierenden Materials gebildet. Mit Partikeln elektrisch isolierenden Materials, insbesondere mit Partikeln im Mikrometerbereich, ist es leicht möglich, einen definierten Luftspalt mit einer Breite von einem Bruchteil eines Mikrometers oder von wenigen Mikrometern zur Vermeidung der Ausbildung von Wirbelströmen zu realisieren. Gleichzeitig ist die Anordnung solcher Abstandshalter besonders leicht möglich, da lediglich eine hinreichend hohe Dichte zur zuverlässigen Beabstandung der Magnetbleche erreicht werden muss. Eine genaue Positionierung der Abstandshalter an den Magnetblechen in der Art einer kontrollierten Mikromanipulation hingegen ist nicht eigens erforderlich. Somit bilden Keramikpartikel besonders einfach einsetzbare Abstandshalter im erfindungsgemäß relevanten Abstandsbereich von einigen Mikrometern. Vorteilhaft kann in dieser Weiterbildung des erfindungsgemäßen Magnetblechstapels zudem die Konzentration von Partikeln frei eingestellt werden, sodass die Beabstandung der Magnetbleche des Magnetblechstapels frei eingestellt und maßgeschneidert werden kann.

Vorzugsweise ist oder sind bei dem Magnetblechstapel gemäß der Erfindung der oder die Partikel mit Keramikpartikeln gebildet. Vorteilhaft bilden gerade wenige Mikrometer große Keramikpartikel besonders harte und hochfeste Abstandshalter aus, welche eine hohe Temperaturbelastung erlauben.

Bevorzugt sind bei dem erfindungsgemäßen Magnetblechstapel der oder die Partikel im Wesentlichen sphärisch ausgebildet. Vorteilhaft lässt sich mit sphärischen Partikeln eine kontrollierte Beabstandung von Magnetblechen leicht erreichen, da mit sphärischen Partikeln eine kontrollierte Ausrichtung dieser Partikel an Magnetblechen aufgrund der Isotropie der sphärischen Gestalt nicht erforderlich ist. Besonders bevorzugt weisen die Partikel eine im Wesentlichen sphärische Gestalt auf. Unter einer im Wesentlichen sphärischen Gestalt ist eine Gestalt zu verstehen, deren Radius innerhalb von höchstens 20 Prozent in verschiedenen Raumrichtungen variiert. Besonders bevorzugt variiert der Radius innerhalb von höchstens 10 Prozent und idealerweise innerhalb von höchstens 5 Prozent. Besonders bevorzugt weisen die Partikel eine nicht splittrige und/oder eine nicht spratzige und/oder eine nicht faserartige und/oder eine nicht plättchenartige Gestalt auf.

Idealerweise weisen die Durchmesser der Partikel eine Größenverteilung auf, welche monomodal oder, zumindest näherungsweise, gaussverteilt ist mit einem Mittelwert von mindestens 0,5 und/oder höchstens 20 Mikrometern, vorzugsweise mindestens einem Mikrometer und höchstens 6 Mikrometern, besonders bevorzugt mindestens 2 Mikrometern und höchstens 4 Mikrometern.

Vorzugsweise sind die Durchmesser der Partikel mit einer Verteilungsfunktion verteilt, welche eine Standardabweichung von höchstens 5 Mikrometern, zweckmäßig höchstens 3 Mikrometern und idealerweise höchstens einem Mikrometer, aufweist.

Bei dem erfindungsgemäßen Verfahren zur Fertigung eines Magnetblechstapels werden Magnetbleche sowie eine Suspension mit Partikeln isolierenden Materials herangezogen. Erfindungsgemäß wird bei dem Verfahren die Suspension an eines oder mehrere Magnetbleche deponiert, wonach die Magnetbleche gestapelt werden. Bei dem erfindungsgemäßen Verfahren ist es folglich nicht erforderlich, eigens Abstandshalter individuell zu mikropositionieren. Vielmehr ist es ausreichend, die Abstandshalter in Form von Partikeln, die mit elektrisch isolierendem Material gebildet sind, in einer Suspension zu halten und als Suspension auf die Magnetbleche aufzubringen.

Die Suspension kann optional Binder enthalten, welche die Partikel nach Deposition an den Magnetblechen gewissermaßen festkleben. Zweckmäßig sind die Partikel sphärische Partikel und vorzugsweise Keramikpartikel wie oben beschrieben. Mittels Keramikpartikeln ist zudem eine mechanische Stabilität des Magnetblechstapels sehr einfach sichergestellt.

In einer vorteilhaften Weiterbildung des erfindungsgemäßen Verfahrens wird deponiert, indem die Suspension gesprüht und/oder gedruckt wird und/oder das oder die Magnetbleche in die Suspension getaucht werden.

Zweckmäßig werden bei dem erfindungsgemäßen Verfahren die Magnetbleche, während oder nachdem sie gestapelt werden, miteinander verpresst oder paketiert. Mittels der Verpressung oder Paketierung der Magnetbleche sind die Partikel derart zwischen den Magnetblechen kraftschlüssig und gegebenenfalls auch formschlüssig gehalten, dass eine mechanisch äußerst stabile Arretierung der Partikel zwischen den Magnetblechen gegeben ist.

Die erfindungsgemäße elektrische Maschine ist insbesondere ein Elektromotor und/oder ein elektrischer Generator und weist einen erfindungsgemäßen Magnetblechstapel wie vorhergehend beschrieben, insbesondere hergestellt nach einem erfindungsgemäßen Verfahren wie vorhergehend beschrieben, auf. Vorzugsweise weist die elektrische Maschine einen Stator und/oder einen Rotor mit jeweils einem erfindungsgemäßen Magnetblechstapel auf.

Nachfolgend wird die Erfindung anhand eines in der Zeichnung angegeben Ausführungsbeispiels näher erläutert.

Es zeigen:

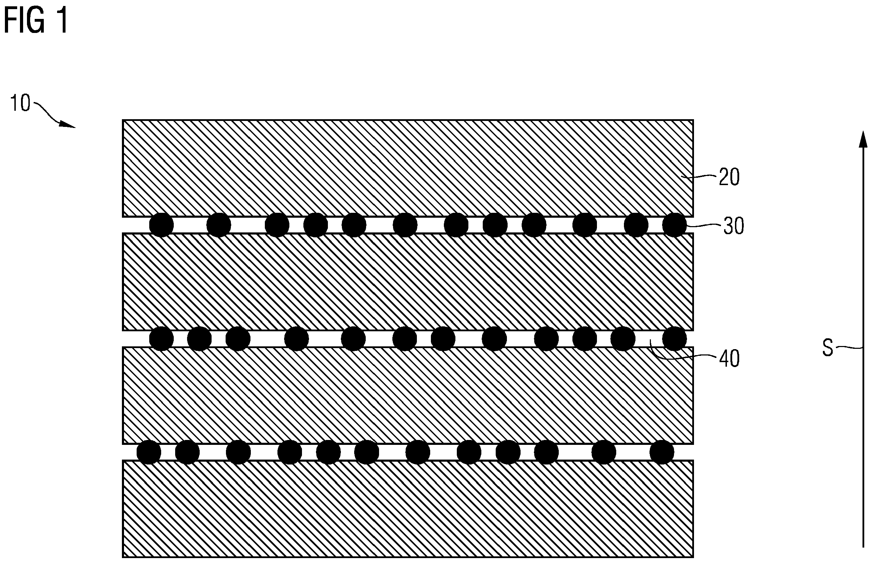

- Figur 1: einen erfindungsgemäßen Magnetblechstapel schematisch im Querschnitt sowie
- Figur 2: eine erfindungsgemäße elektrische Maschine schematisch in einer Prinzipskizze.

Der erfindungsgemäße Magnetblechstapel 10 umfasst in an sich bekannter Weise eine Mehrzahl von Magnetblechen 20, welche im Wesentlichen als ebene Flachteile mit zueinander parallelen Flachseiten ausgebildet sind. Die Magnetbleche 20 sind voneinander mittels Keramikpartikeln 30 beabstandet, welche zwischen den Magnetblechen 20 befindlich und mit diesen in Anlage sind. Die Keramikpartikel 30 weisen jeweils eine nahezu perfekt sphärische Gestalt sowie einen Durchmesser von 40 Mikrometern auf. Dabei weisen die Keramikpartikel 30 untereinander eine sehr homogene Größenverteilung auf, d.h. die Durchmesser der Keramikpartikel sind näherungsweise gaussverteilt mit einem Mittelwert bei 3 Mikrometern und einer Standardabweichung von 1,5 Mikrometern. In weiteren, nicht eigens dargestellten Ausführungsbeispielen sind zusätzlich Keramikpartikel, welche einen Durchmesser von mehr als 5 Mikrometern und weniger als einem Mikrometer haben, ausgefiltert. Damit fungieren die Keramikpartikel 30 gewissermaßen als Abstandshalter zwischen zwei benachbarten Magnetblechen 20 und halten die Magnetbleche auf einem mittleren Abstand von etwa 2,5 Mikrometern voneinander fern, da sich bei der Stapelverpressung die Keramikpartikel leicht in die Metalloberflächen eindrücken. In weiteren, nicht eigens dargestellten Ausführungsbeispielen, welche im Übrigen dem Dargestellten entsprechen, können die Keramikpartikel auch eine monomodale Größenverteilung aufweisen.

Die Keramikpartikel 30 sind im dargestellten Ausführungsbeispiel aus Aluminiumoxid gebildet. In weiteren, nicht eigens dargestellten Ausführungsbeispielen sind die Keramikpartikel 30 alternativ oder zusätzlich mit oder aus Zirkonoxid und/oder Magnesiumoxid und/oder Yttriumoxid und/oder Bornitrid und/oder Yttrium-Aluminium-Granat und/oder Siliziumnitrid und/oder Siliziumdioxid gebildet.

Zunächst werden die Magnetbleche 20 gestanzt oder auf sonstige Weise gefertigt, beispielsweise mittels Siebdrucks und/oder Schablonendrucks und anschließenden Sinterns.

Nachfolgend können die Keramikpartikel 30 erfindungsgemäß wie folgt zwischen die Magnetbleche 20 eingebracht werden:
Dazu wird eine Suspension mit den Keramikpartikeln 30 herangezogen. Beispielsweise wird eine wässrige Suspension mit den Keramikpartikeln 30 herangezogen. Alternativ kann das Einbringen der Keramikpartikel 30 mittels einer Suspension der Keramikpartikel 30 in einem organischen Lösungsmittel erfolgen. Der Suspension sind optional Binder und Dispergatoren zugesetzt.

Die Suspension mit den Keramikpartikeln 30 wird mittels Sprühens oder Tauchens oder Druckens auf die Magnetbleche 20 aufgebracht, wonach sich als nachfolgender Verfahrensschritt ein Trocknen der Suspension und ein Aushärten anschließt. Je nach optional für die Suspension gewähltem Binder kann der Schritt des Aushärtens auch entfallen.

Nachfolgend werden die Magnetbleche 20 aufeinander gestapelt und miteinander in Richtung senkrecht zu den Flachseiten der Magnetbleche 20, d.h. in Stapelrichtung S, verpresst. Dabei werden die einzelnen Keramikpartikel 30 mechanisch in die Flachseiten der Magnetbleche 20 eingepresst. Im Falle der optional verwendeten Binder bleiben die Keramikpartikel 30 zusätzlich über den als Kleber fungierenden Binder an den Flachseiten der Magnetbleche 20 fixiert. Auf diese Weise bleiben die Keramikpartikel 30 form- und kraftschlüssig zwischen den Magnetblechen 20 auch bei hohen Betriebsbelastungen fixiert.

Alternativ können die Magnetbleche 20 in weiteren, nicht eigens dargestellten Ausführungsbeispielen auch auf andere Weise verpresst sein.

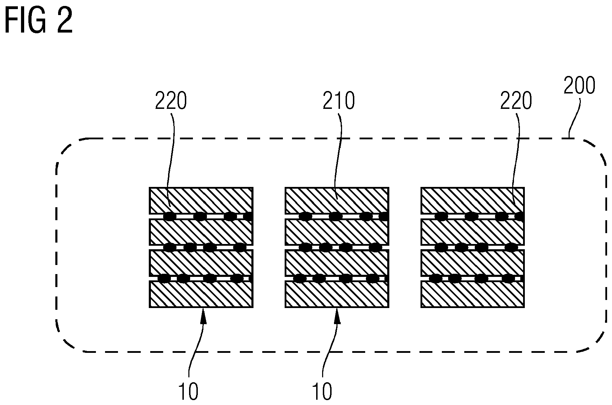

Die in Fig. 2 dargestellte erfindungsgemäße elektrische Maschine 200 umfasst einen Stator 210 und einen Rotor 220. Sowohl der Stator 210 als auch der Rotor 220 der elektrischen Maschine sind jeweils mit einem erfindungsgemäß hergestellten erfindungsgemäßen Magnetblechstaple 10 wie oben beschrieben gebildet.

## Patentansprüche

1. Magnetblechstapel mit einer Mehrzahl von Magnetblechen (20), welche voneinander elektrisch isoliert sind, indem sie voneinander überwiegend mit nichtverschwindendem lichten Maß beabstandet sind.

2. Magnetblechstapel nach einem der vorhergehenden Ansprüche, bei welchem die Magnetbleche (20) mittels eines oder mehrerer zwischenliegender Abstandshalter (30) voneinander beabstandet sind.

3. Magnetblechstapel nach einem der vorhergehenden Ansprüche, bei welchem der oder die Abstandshalter (30) mit Keramik gebildet ist/sind.

4. Magnetblechstapel nach einem der vorhergehenden Ansprüche, bei welchem der oder die Abstandshalter (30) mit Aluminiumoxid und/oder Zirkonoxid und/oder Magnesiumoxid und/oder Yttriumoxid und/oder Bornitrid und/oder Yttrium-Aluminium-Granat und/oder Siliziumnitrid und/oder Siliziumdioxid gebildet ist oder sind.

5. Magnetblechstapel nach einem der vorhergehenden Ansprüche, bei welchem der oder die Abstandshalter (30) mit Partikeln elektrisch isolierenden Materials gebildet ist/sind.

6. Magnetblechstapel nach einem der vorhergehenden Ansprüche, bei welchem der oder die Partikel mit Keramikpartikeln gebildet ist/sind.

7. Magnetblechstapel nach einem der vorhergehenden Ansprüche, bei welchem der oder die Partikel im Wesentlichen sphärisch ausgebildet sind.

8. Verfahren zur Fertigung eines Magnetblechstapels nach einem der vorhergehenden Ansprüche, bei welchem Magnetbleche (20) herangezogen werden, eine Suspension mit den Keramikpartikeln herangezogen wird und die Suspension an eines oder mehrere Magnetbleche (20) deponiert wird, wonach die Magnetbleche (20) gestapelt werden.

9. Verfahren nach dem vorhergehenden Anspruch, bei welchem deponiert wird, indem die Suspension gesprüht und/oder gedruckt wird und/oder das oder die Magnetbleche (20) in die Suspension getaucht werden.

10. Verfahren nach einem der vorhergehenden Ansprüche, bei welchem die Magnetbleche (20), während oder nachdem sie gestapelt werden, miteinander verpresst oder paketiert werden.

11. Elektrische Maschine mit einem Magnetblechstapel (10) nach einem der Ansprüche 1 bis 7 und/oder hergestellt nach einem Verfahren nach einem der Ansprüche 8 bis 10.
